# EUROPEAN PATENT APPLICATION

(11) **EP 4 254 823 A1**
(43) Date of publication of application: **04.10.2023**
(21) Application number: 21908920.8
(22) Date of filing: 12.11.2021
(51) Int. Cl.: H04B 10/075, H01S 3/10

(54) **LOOP CONTROL SYSTEM AND METHOD**

(30) Priority: 22.12.2020 CN 202011529262
(71) Applicant: ZTE Corporation, Shenzhen, Guangdong 518057 (CN)
(72) Inventor: CHEN, Weizhang, Shenzhen, Guangdong 518057 (CN); ZHAO, Zhiyong, Shenzhen, Guangdong 518057 (CN); ZHONG, Changlong, Shenzhen, Guangdong 518057 (CN)
(74) Representative: Osterhoff, Utz
(86) International application number: PCT/CN2021/130228
(87) International publication number: WO 2022/134920

(57) **Abstract**

Embodiments of the present application relate to the field of optical fiber communications. Disclosed are a loop control system and method. The system includes a coupler, a pump laser, an optical fiber amplifier, a variable optical attenuator, an optical splitter, a photoelectric detector, and a loop controller. A first input end of the coupler is used as an input end of the system and is configured to receive signal light. A second input end of the coupler is connected to an output end of the pump laser. An output end of the coupler is connected to an input end of the optical fiber amplifier, an output end of the optical fiber amplifier is connected to an input end of the variable optical attenuator, and an output end of the variable optical attenuator is connected to an input end of the optical splitter. A first output end of the optical splitter is used as an output end of the system, and a second output end of the optical splitter is connected to an input end of the photoelectric detector. An output end of the photoelectric detector is connected to an input end of the loop controller, and a first control end of the loop controller is connected to a control end of the variable optical attenuator.

## Description

### CROSS-REFERENCE TO RELATED APPLICATIONS

The present application claims priority to Chinese Patent Application No. 202011529262.9, filed on December 22, 2020, the entire disclosures of which are incorporated herein by reference.

### TECHNICAL FIELD

The present application relates to the field of optical fiber communication, and in particular to a loop control system and method.

### BACKGROUND

Optical Fiber Amplifier (OFA) is widely used in optical fiber communication lines, such as erbium-doped optical fiber amplifier, praseodymium-doped optical fiber amplifier and niobium-doped optical fiber amplifier. OFA, as a new type of all-optical amplifier, can directly perform all-optical amplification on the signal without complex processes such as photoelectric conversion, electro-optic conversion and signal regeneration, has good "transparency", and is especially suitable for relay amplification of long-distance optical communication. OFA has laid a technical foundation for the realization of all-optical communication. At present, the use of the optical fiber amplifier is to simultaneously inject signal light and pump light into the optical fiber amplifier. Under the excitation of the pump light, the optical fiber amplifier can amplify the signal light and output the signal light. In order to achieve a relatively stable output optical signal, the amplification factor of the input light is usually adjusted by adjusting the magnitude of the pump light output by the pump laser, so that the output optical signal is stable.

However, frequent changes in the magnitude of the pump light output by the pump laser will bring greater disturbance to the output light, that is, greater noise interference to the output light.

### SUMMARY

The embodiment of the present application provides a loop control system, including: a coupler, a pump laser, an optical fiber amplifier, a variable optical attenuator, an optical splitter, a photoelectric detector, and a loop controller. A first input end of the coupler is used as the input end of the system and is configured to receive signal light. A second input end of the coupler is connected to an output end of the pump laser, an output end of the coupler is connected to an input end of the fiber amplifier, an output end of the optical fiber amplifier is connected to an input end of the variable optical attenuator, and an output end of the variable optical attenuator is connected to an input end of the optical splitter, a first output end of the optical splitter is used as an output end of the system, a second output end of the optical splitter is connected to an input end of the photoelectric detector, an output end of the photoelectric detector is connected to an input end of the loop controller, and a first control end of the loop controller is connected to a control end of the variable optical attenuator.

The embodiment of the present application also provides a loop control method, which is applied to a loop controller in a loop control system. The loop control system includes: a coupler, a pump laser, an optical fiber amplifier, a variable optical attenuator, an optical splitter, and a photoelectric detector. A first input end of the coupler is used as the input end of the system and is configured to receive signal light. A second input end of the coupler is connected to the output end of the pump laser, an output end of the coupler is connected to an input end of the optical fiber amplifier, an output end of the optical fiber amplifier is connected to an input end of the variable optical attenuator, and an output end of the variable optical attenuator is connected to an input end of the optical splitter. A first output end of the optical splitter is used as an output end of the system, a second output end of the optical splitter is connected to an input end of the photoelectric detector, an output end of the photoelectric detector is connected to an input end of the loop controller, and a first control end of the loop controller is connected to a control end of the variable optical attenuator. The method includes: obtaining an electrical signal output by the photoelectric detector, and determining an actual output optical power of the system according to the electrical signal; obtaining a target attenuation value of the variable optical attenuator according to the actual output optical power of the system, a preset output optical power of the system and a current attenuation value of the variable optical attenuator in the case that the actual output optical power of the system does not match the preset output optical power of the system; and adjusting the attenuation value of the variable optical attenuator to the target attenuation value.

### BRIEF DESCRIPTION OF THE DRAWINGS

FIG. 1 is a schematic structural diagram of a loop control system according to a first embodiment of the present application.
FIG. 2 is a schematic structural diagram of a loop controller according to the first embodiment of the present application.
FIG. 3 is a schematic structural diagram of a loop control system according to a second embodiment of the present application.
FIG. 4 is a schematic flowchart of a loop control method according to a third embodiment of the present application.
FIG. 5 is a schematic flowchart of a loop control method according to a fourth embodiment of the present application.
FIG. 6 is a schematic flowchart of a loop control method according to a fifth embodiment of the present application.

### DETAILED DESCRIPTION OF THE EMBODIMENTS

The main purpose of the embodiments of the present application is to provide a loop control system and a loop control method to reduce the fluctuation of the output light of the system and improve the stability of the output light power of the system.

In order to make the purpose, technical solutions and advantages of the embodiments of the present application clearer, the embodiments of the present application will be described in detail below with reference to the accompanying drawings. However, those of ordinary skill in the art can understand that in each embodiment of the application, many technical details are provided for readers to better understand the application. However, even without these technical details and various changes and modifications based on the following embodiments, the technical solutions claimed in the present application can also be realized. The division of the following embodiments is for the convenience of description, and should not constitute any limitation to the specific implementation of the present application, and the embodiments can be combined and referred to each other on the premise of no contradiction.

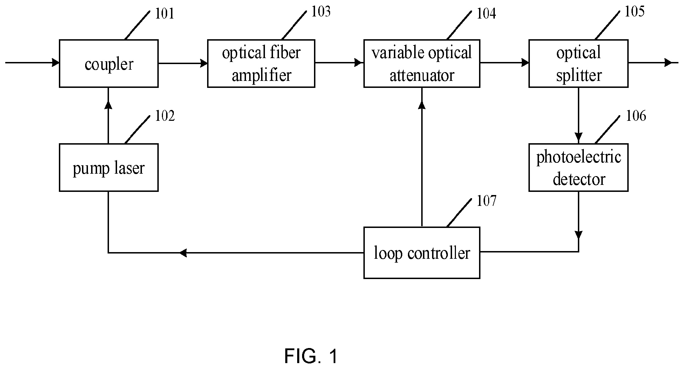

The first embodiment of the present application relates to a loop control system. The structural diagram of the loop control system in this embodiment is shown in FIG. 1, including: a coupler 101, a pump laser 102, an optical fiber amplifier 103, a variable optical attenuator 104, an optical splitter 105, a photoelectric detector 106 and a loop controller 107.

Specifically, a first input end of the coupler 101 is used as an input end of the system and receives the signal light from the signal source. A second input end of the coupler 101 is connected to an output end of the pump laser 102, an output end of the coupler 101 is connected to an input end of optical fiber amplifier 103, an output end of optical fiber amplifier 103 is connected to an input end of variable optical attenuator 104, and an output end of variable optical attenuator 104 is connected to an input end of optical splitter 105. A first output end of optical splitter 105 is used as an output end of the system, a second output end of the optical splitter 105 is connected to an input end of the photoelectric detector 106, an output end of the photoelectric detector 106 is connected to an input end of the loop controller 107, and a first control end of the loop controller 107 is connected to a control end of the variable optical attenuator 104.

Specifically, the variable optical attenuator 104, the optical splitter 105, the photoelectric detector 106, and the loop controller 107 form a control feedback loop of the variable optical attenuator 104.

In practical applications, the wavelength and power of the signal light received by the first input end of the coupler 101 can be set according to practical application requirements, for example, the wavelength of the signal light can be set to 1550 nm.

Specifically, the first input end of the coupler 101 receives the signal light sent by the signal source, and the second input end of the coupler 101 is connected to the output end of the pump laser 102 for receiving the pump light of the pump laser 102. In practical applications, the wavelength of the pump light can be 980nm or 1480nm. After the coupler 101 receives the signal light and the pump light, it couples the signal light and the pump light into the optical fiber amplifier 103. In the optical fiber amplifier 103, the signal light is amplified under the excitation of the pump light, wherein the signal light magnification is positively correlated with the pump light intensity, that is, the stronger the pump light intensity is, the greater the signal light magnification is.

In one example, the coupler 101 is an isolation coupler. Specifically, the coupler 101 has the function of an isolator. Since the signal light will have a reflected light signal during the optical fiber transmission process, by setting the coupler 101 as an isolation coupler, the reflected light signal generated by the optical fiber amplifier 103 can be isolated to prevent the reflected signal light generated by the optical fiber amplifier 103 from affecting the operation of the pump laser 102.

Specifically, after the optical fiber amplifier 103 amplifies the signal light, the actual output optical power of the optical fiber amplifier 103 fluctuates greatly, which will affect the stability of the system. Therefore, in order to realize the stability of the actual output optical power of the system, the output current of the pump laser 102 is adjusted in real time through the loop controller 107 according to the actual output optical power of the system. However, since the pump laser 102 has more adjustment times, the pump laser 102 generates more noise while continuously adjusting the pump light. In order to meet the stability of the actual output light of the system and the requirement of reducing noise, in this application, the feedback loop of the variable optical attenuator is set to improve the stability of the actual output light of the system, and at the same time the noise generated due to the excessively high frequency adjusted by the pump laser 102 is also avoided.

In this embodiment, the actual output optical power of the optical fiber amplifier 103 is attenuated to a certain extent by the variable optical attenuator 104, so as to meet the requirement of system stability.

Specifically, after the variable optical attenuator 104 attenuates the actual output optical power of the optical fiber amplifier 103, the optical splitter 105 outputs the attenuated output optical power of the optical fiber amplifier 103 to obtain the actual output optical power of the system. However, after the actual output optical power of the optical fiber amplifier 103 is attenuated by the variable optical attenuator 104, it may occur that the actual output optical power of the system is not within the preset range. Therefore, the first output end of the optical splitter 105 is used as the output end of the system to connect the back-end equipment, such as an optical power monitor (OPM), and the second output end of the optical splitter 105 is connected to the photoelectric detector 106, and part of the output light is transmitted to the photoelectric detector 106 for photoelectric signal conversion. Afterwards, the converted electrical signal enters the loop controller 107, and passes through the control feedback loop of the variable optical attenuator 104, so that the attenuation value of the variable optical attenuator 104 can be adjusted in real time according to the power of the output light of the system, thereby reducing the fluctuation of the output light of the system and improving the stability of the output light power of the system.

In one example, the optical fiber amplifier 103 is one of an erbium-doped optical fiber amplifier, a praseodymium-doped optical fiber amplifier, and a niobium-doped optical fiber amplifier. In practical applications, one of the optical fiber amplifiers can be selected according to actual needs, which is not specifically limited in this embodiment.

The loop control system proposed in this application is provided with a control feedback loop, that is, the control feedback loop of the variable optical attenuator, the actual output light of the system is received by the photoelectric detector, and the photoelectric signal is converted and input to the loop controller, so that the loop controller can adjust the attenuation value of the variable optical attenuator according to the actual output optical power of the system, thereby improving the stability of the actual output optical power of the system. At the same time, since the present application adopts the control feedback loop of the variable optical attenuator, the noise interference caused by frequent changes of the pumping light of the pumping laser is eliminated.

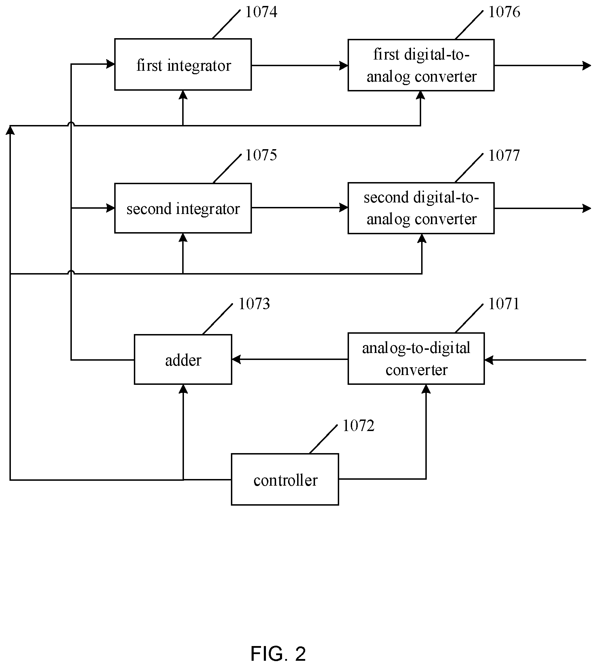

In one example, as shown in FIG. 2, the loop controller 107 includes: an analog-to-digital converter 1071, a controller 1072, an adder 1073, a first integrator 1074, a second integrator 1075, a first digital-to-analog converter 1076, and a second digital-to-analog converter 1077.

Specifically, the controller 1072 is respectively connected to the analog-to-digital converter 1071, the adder 1073, the first integrator 1074, the second integrator 1075, the first digital-to-analog converter 1076, and the second digital-to-analog converter 1077. The input end of the analog-to-digital converter 1071 is used as the input end of the loop controller, and the output end of the analog-to-digital converter 1071 is connected to the input end of the adder 1073. The output end of adder 1073 is respectively connected to the input end of first integrator 1074 and the input end of second integrator 1075. The output end of the first integrator 1074 is connected to the input end of the first digital-to-analog converter 1076, and the output end of the first digital-to-analog converter 1076 is connected to the variable optical attenuator 104. The output end of the second integrator 1075 is connected to the input end of the second analog-to-digital converter 1077, and the output end of the second digital-to-analog converter 1077 is connected to the pump laser 102.

In practical applications, the controller 1072 has the functions of initializing and driving control of other modules. The input end of the analog-to-digital converter 1071 receives the analog signal of the photoelectric detector 106, and converts the analog signal of the photoelectric detector into a digital signal. The adder 1073 is configured to receive the digital signal output by the analog-to-digital converter 1071 and the instruction provided by the controller to perform calculation. The first integrator 1074 is configured to perform the integral operation according to the data output by the adder 1073 and the instruction of the controller, and send it to the first digital-to-analog converter 1076, and the first digital-to-analog converter 1076 converts the digital signal of the integral operation into an analog signal and inputs the analog signal to the variable optical attenuator 104. The second integrator 1075 is configured to perform an integral operation according to the data output by the adder 1073 and the instruction of the controller, and send it to the second digital-to-analog converter 1077, and the second digital-to-analog converter 1077 converts the digital signal of the integral operation into an analog signal and inputs the analog signal to pump laser 102.

The second embodiment of the present application relates to a loop control system. The second embodiment is substantially the same as the first embodiment, the main difference being that: in the second embodiment of the present application, the second control end of the loop controller is connected to the control end of the pump laser. It should be noted that the related technical details of the above-mentioned first embodiment are still valid in this embodiment, and will not be described here in order to avoid repetition.

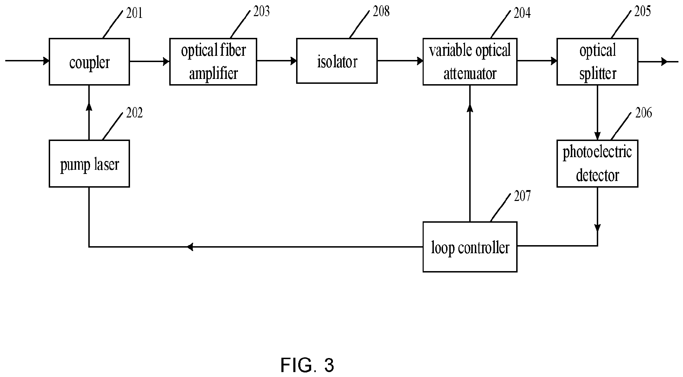

The structural diagram of the loop control system in this embodiment is shown in FIG. 3. The loop control system includes a coupler 201, a pump laser 202, an optical fiber amplifier 203, a variable optical attenuator 204, an optical splitter 205, a photoelectric detector 206, and loop controller 207.

Specifically, a first input end of the coupler 201 is used as an input end of the system and receives the signal light emitted by the signal source. A second input end of the coupler 201 is connected to an output end of the pump laser 202. An output end of the coupler 201 is connected to an input end of the optical fiber amplifier 203, an output end of the optical fiber amplifier 203 is connected to an input end of the variable optical attenuator 204, and an output end of the variable optical attenuator 204 is connected to an input end of the optical splitter 205. The first output end of the optical splitter 205 is used as an output end of the system, a second output end of the optical splitter 205 is connected to an input end of the photoelectric detector 206, and an output end of the photoelectric detector 206 is connected to an input end of the loop controller 207. A first control end of the loop controller 207 is connected to a control end of the variable optical attenuator 204, and a second control end of the loop controller 207 is connected to a control end of the pump laser 202.

In this embodiment, not only the control feedback loop of the variable optical attenuator 204 is included, but also the control feedback loop of the pump laser 202 formed by the pump laser 202, the beam splitter 205, the photoelectric detector 206, and the loop controller 207 is included.

This embodiment is provided with two control feedback loops, that is, the control feedback loop of the variable optical attenuator 204 and the control feedback loop of the pump laser 202, and at least one of the variable optical attenuator 204 and the pump laser is selectively adjusted through the two feedback loops. The two feedback loops can cooperate with each other to adjust the power of the actual output light of the system, further improving the stability of the actual output light of the system.

In one example, as shown in FIG. 3, the loop control system further includes an isolator 208. In this embodiment, by setting an isolator between the optical fiber amplifier 203 and the variable optical attenuator 204, the reflected optical signal of the variable optical attenuator 204 can be isolated to prevent the reflected optical signal of the variable optical attenuator 204 from affecting the operation of the optical fiber amplifier 203, and improve the stability of the system.

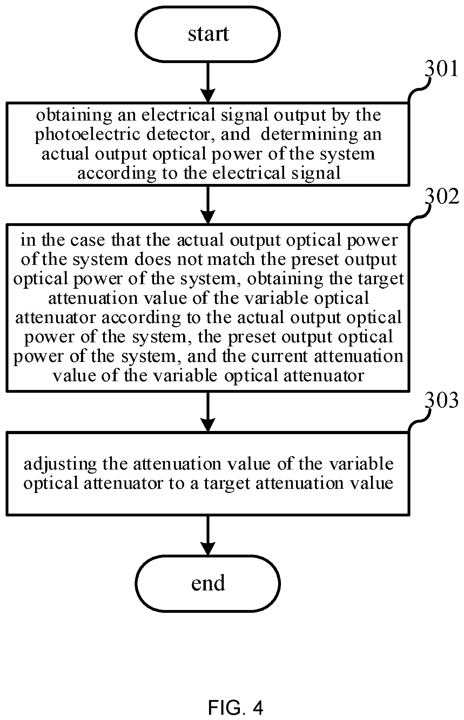

The third embodiment of the present application relates to a loop control method, which is applied to the loop control system in the above-mentioned first embodiment; the schematic flowchart of the loop control method involved in the third embodiment of the present application is shown in FIG. 4, including the following steps:
Step 301, obtaining an electrical signal output by the photoelectric detector, and determining an actual output optical power of the system according to the electrical signal.

Specifically, after the photoelectric detector receives the actual output light of the system output by the optical splitter, it will convert the actual output light of the system into an electrical signal. There is a functional relationship between the actual output light of the system and the voltage of the electrical signal output by the photoelectric detector inside the loop controller. After the loop controller receives the electrical signal, it will calculate the actual output light power of the actual system according to the functional relationship between the actual output light of the system and the electrical signal output by the photoelectric detector and the voltage of the electrical signal.

In one example, determining the actual output light power of the system according to the electrical signal includes: obtaining the actual output light power of the system according to a voltage of the electrical signal, and a function between the actual output optical power of the system preset by the system and the voltage of the electrical signal.

Specifically, the function between the actual output optical power and the voltage of the electrical signal is preset in the loop control system. In the case that the voltage of the electrical signal output by the photoelectric detector is known, the loop controller can obtain the actual output light power of the system according to this function.

In practical applications, there are differences in the functional relationship between the actual output light power of the system and the voltage of the electrical signal output by the photoelectric detector at different wavelengths of the light transmitted by the system. In order to avoid large errors in the actual output optical power of the system calculated by the loop controller due to different wavelengths, before the present application obtains the electrical signal output by the photoelectric detector, that is, before the loop control system has officially started to operate, it is necessary to calibrate the function between the preset actual output optical power of the system and the voltage of the output electrical signal of the photoelectric detector, and determine the coefficient of the function.

For example, the actual output optical power of the system is Pout0, and the voltage of the electrical signal output by the photoelectric detector is V_{TIA}, and the two should satisfy the functional relationship of VTIA=k *PoutO+b; because the light transmitted by the system has different values of k and b at different wavelengths, the present application needs to calibrate the functional relationship of VTIA=k *Pout0+b before the system starts to operate and obtain the value of k and b, thereby completing the calibration of the functional relationship, and storing the calibrated functional relationship in the loop controller.

Step 302, in the case that the actual output optical power of the system does not match the preset output optical power of the system, obtaining the target attenuation value of the variable optical attenuator according to the actual output optical power of the system, the preset output optical power of the system, and the current attenuation value of the variable optical attenuator.

Specifically, a preset output optical power of the system is set inside the loop controller, that is, an ideal output optical power of the system. After the loop controller obtains the actual output light power of the system, it will compare the actual output light power of the system with the preset output light power of the system. If the actual output light power of the system matches the preset output light power of the system, it means that the actual output light power of the system reaches the ideal state. At this time, it is enough to maintain the internal parameters of the variable optical attenuator, that is, the control voltage without performing loop feedback control. However, if the actual output light power of the system does not match the preset output light power of the system, it means that the actual output light power of the system has not reached the ideal state. Therefore, the loop controller will obtain the attenuation value of the variable optical attenuator according to the actual output optical power of the system, the preset output optical power of the system, and the current attenuation value of the variable optical attenuator.

In an example, the target attenuation value of the variable optical attenuator is obtained according to the actual output light power of the system, the preset output optical power of the system, and the current attenuation value of the variable optical attenuator, including: obtaining the adjustment value of the attenuation value of the variable optical attenuator according to the actual output light power of the system and the preset output light power of the system; obtaining the target attenuation value according to the current attenuation value and the adjustment value of the variable optical attenuator.

Specifically, in this embodiment, firstly, the adjustment value of the attenuation value of the variable optical attenuator is obtained according to the actual output light power of the system and the preset output light power of the system; after that, the specific process of obtaining the target attenuation value according to the current attenuation value and the adjustment value of the variable optical attenuator is as follows: in the case that the actual output light power of the system is less than the preset output light power of the system, the difference between the attenuation value of the current variable optical attenuator and the adjustment value is used as the target attenuation value; in the case that the actual output light power of the system is greater than the preset output light power of the system, the sum of the current attenuation value of the variable optical attenuator and the adjustment value is used as the target attenuation value.

In practical applications, when the system starts to operate, the attenuation value inside the variable optical attenuator is obtained according to the preset output optical power Pout of the system and the output optical power Pout1 of the preset optical fiber amplifier, that is, the attenuation value VOA1= Pout1-Pout. However, in the actual operation of the system, each operating parameter in the system may have some deviation due to external reasons. Therefore, it is necessary to adjust the attenuation value of the variable optical attenuator through the feedback control loop so that the actual output optical power of the system is within the ideal range.

Step 303, adjusting the attenuation value of the variable optical attenuator to a target attenuation value.

Specifically, after the loop controller obtains the target attenuation value, it will adjust the attenuation value of the variable optical attenuator to the target attenuation value, thereby realizing the adjustment of the control feedback loop of the variable optical attenuator.

In one example, adjusting the attenuation value of the variable optical attenuator to the target attenuation value includes: obtaining the target control voltage of the variable optical attenuator according to the target attenuation value; and adjusting the control voltage of the variable optical attenuator to the target control voltage for adjusting the attenuation value of the variable optical attenuator to the target attenuation value.

Specifically, the loop controller is provided with a functional relationship between the attenuation value of the variable optical attenuator and the control voltage of the variable optical attenuator. After the loop controller obtains the target attenuation value of the variable optical attenuator, the target control voltage of the variable optical attenuator is obtained according to the functional relationship between the attenuation value of the variable optical attenuator and the control voltage of the variable optical attenuator, and the target attenuation value of the variable optical attenuator, and the target control voltage is input to the variable optical attenuator. The variable optical attenuator controls the attenuation value of the variable optical attenuator to the target attenuation value according to the control voltage, that is, the variable optical attenuator adjusts the attenuation value of the variable optical attenuator to the target attenuation value, thereby attenuating the output light power of the optical fiber amplifier, so that the actual output light power of the system can be consistent with the preset output light power of the system.

In practical applications, the loop controller is preset with a function of the attenuation value of the variable optical attenuator and the control voltage of the variable optical attenuator, and the function is composed of multiple linear function segments; the loop controller can determine the linear function segment corresponding to the target attenuation value according to the target attenuation value; afterwards, the control voltage of the variable optical attenuator is obtained according to the linear function segment and the target attenuation value.

In this embodiment, the attenuation value of the variable optical attenuator is adjusted through the control loop of the variable optical attenuator, thereby attenuating the output optical power of the optical fiber amplifier, so that the actual output optical power of the system is within a preset range; at the same time, adjusting the actual output light power of the system through the variable optical attenuator can reduce the adjustment frequency of the pump laser, and also favorably reduce the noise problem caused by adjusting the pump lase.

The fourth embodiment of the present application relates to a loop control method, which is applied to the loop control system in the above-mentioned second embodiment; the fourth embodiment is substantially the same as the third embodiment, the main difference being: in the fourth embodiment, the second control end of the loop controller in the loop control system is connected to the control end of the pump laser; after obtaining the electrical signal output by the photoelectric detector and determining the actual output optical power of the system according to the output electrical signal, a step of adjusting the pump laser is also included.

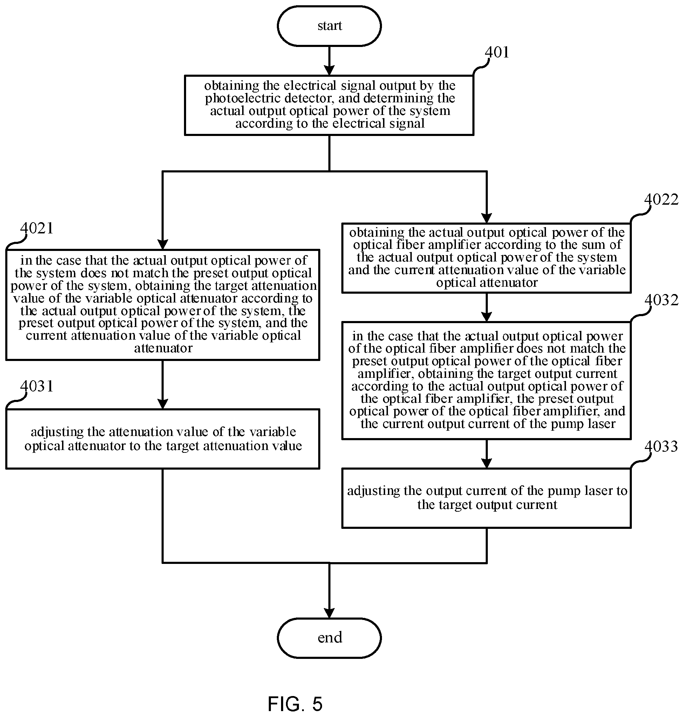

A schematic flowchart of the loop control method involved in the fourth embodiment of the present application is shown in FIG. 5 , including the following steps:
Step 401, obtaining the electrical signal output by the photoelectric detector, and determining the actual output optical power of the system according to the electrical signal.

Step 4021, in the case that the actual output optical power of the system does not match the preset output optical power of the system, obtaining the target attenuation value of the variable optical attenuator according to the actual output optical power of the system, the preset output optical power of the system, and the current attenuation value of the variable optical attenuator.

Step 4031, adjusting the attenuation value of the variable optical attenuator to the target attenuation value.

The above step 401, step 4021, and step 4031 are the same as steps 301 to 303 of the third embodiment, which are not repeated here to avoid repetition.

In this embodiment, after obtaining the electrical signal output by the photoelectric detector and determining the actual output optical power of the system according to the output electrical signal, it also includes a step of adjusting the pump laser, and the adjustment step of the pump laser is as follows:
Step 4022, obtaining the actual output optical power of the optical fiber amplifier according to the sum of the actual output optical power of the system and the current attenuation value of the variable optical attenuator.

Specifically, the adjustment of the attenuation value of the variable optical attenuator in the above third embodiment is adjusted according to the preset output optical power of the optical fiber amplifier. However, in practical applications, due to the aging of the pump laser itself or the influence of other devices, the actual output optical power of the actual optical fiber amplifier will decrease, affecting the actual output optical power of the system. Therefore, the present application needs to adjust the pumping light of the pumping laser through the control feedback loop of the pumping laser, so that the actual output optical power of the optical fiber amplifier is consistent with the preset output optical power of the optical fiber amplifier.

Specifically, the actual output optical power of the system is obtained by attenuating the actual output optical power of the optical fiber amplifier through the variable optical attenuator. Therefore, the actual output optical power of the optical fiber amplifier should be equal to the sum of the actual output optical power of the system and the current attenuation value of the variable optical attenuator. In this embodiment, the actual output optical power of the optical fiber amplifier is obtained by adding the actual output optical power of the system to the current attenuation value of the variable optical attenuator, so that according to the actual output optical power of the optical fiber amplifier and the preset output of the optical fiber amplifier, it is necessary to determine whether the pump light of the pump laser needs to be adjusted.

Step 4032, in the case that the actual output optical power of the optical fiber amplifier does not match the preset output optical power of the optical fiber amplifier, obtaining the target output current according to the actual output optical power of the optical fiber amplifier, the preset output optical power of the optical fiber amplifier, and the current output current of the pump laser.

Step 4033, adjusting the output current of the pump laser to the target output current.

Specifically, the preset output optical power of an optical fiber amplifier is set inside the loop controller, that is, the ideal power of the output light of the optical fiber amplifier.

Specifically, the loop controller is set with a redundancy value; when the difference between the actual output optical power of the optical fiber amplifier and the preset output optical power of the optical fiber amplifier is within the redundancy value, it means that the actual output optical power of the optical fiber amplifier matches the preset output optical power of the optical fiber amplifier; when the difference between the actual output optical power of the optical fiber amplifier and the preset output optical power of the optical fiber amplifier is not within the redundancy value, it means that the actual output optical power of the optical fiber amplifier does not match the preset output optical power of the optical fiber amplifier.

Specifically, after the loop controller obtains the actual output optical power of the optical fiber amplifier, in the case that the actual output optical power of the optical fiber amplifier does not match the preset output optical power of the optical fiber amplifier, that is, when the difference between the actual output optical power of the optical fiber amplifier and the preset output optical power of the optical fiber amplifier is greater than the redundancy value, the target output current is obtained according to the actual output optical power of the optical fiber amplifier and the preset output optical power of the optical fiber amplifier, and the current output current of the pump laser; the output current of the pump laser is adjusted to the target output current, thereby adjusting the pump light output by the pump laser, so that the actual output optical power of the optical fiber amplifier is consistent with the preset output optical power of the optical fiber amplifier.

Specifically, the process of obtaining the target output current is: the integral operation is performed according to the difference between the actual output optical power of the optical fiber amplifier and the preset output optical power of the optical fiber amplifier, and the adjustment value of the output current of the pump laser is obtained by using the digital slow start algorithm; according to the adjustment value and the current output current of the pump laser, the target output current is obtained.

In this embodiment, two control feedback loops are provided, that is, the control feedback loop of the variable optical attenuator and the control feedback loop of the pump laser; at least one of the variable optical attenuator and the pump laser is selectively adjusted through two feedback loops; the two feedback loops can cooperate with each other to adjust the actual output light power of the system, further improving the stability of the actual output light of the system.

The fifth embodiment of the present application relates to a loop control method, which is applied to the loop control system in the above-mentioned first embodiment and the second embodiment; the fifth embodiment is substantially the same as the third embodiment, the main difference is that: in the fifth embodiment, after the target attenuation value of the variable optical attenuator is obtained according to the actual output optical power of the system, the preset output optical power of the system, and the current attenuation value of the variable optical attenuator, it also includes: determining whether the target attenuation value is within the preset attenuation range of the variable optical attenuator.

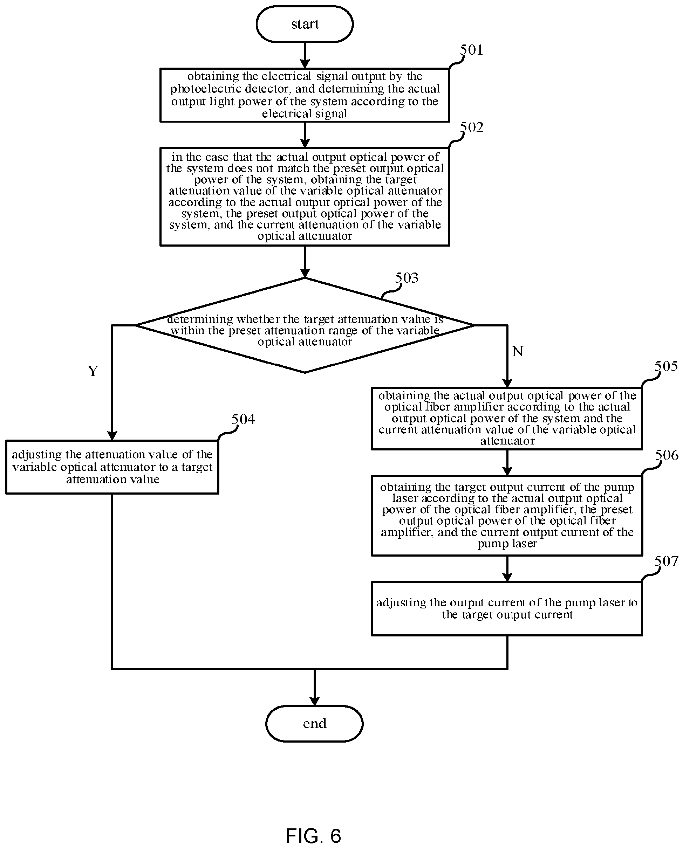

A schematic flowchart of the loop control method involved in the fifth embodiment of the present application is shown in FIG. 6 , including the following steps:
Step 501, obtaining the electrical signal output by the photoelectric detector, and determining the actual output light power of the system according to the electrical signal.

Step 502, in the case that the actual output optical power of the system does not match the preset output optical power of the system, obtaining the target attenuation value of the variable optical attenuator according to the actual output optical power of the system, the preset output optical power of the system, and the current attenuation of the variable optical attenuator.

Step 503, determining whether the target attenuation value is within the preset attenuation range of the variable optical attenuator.

Specifically, if the target attenuation value is within the preset attenuation range of the variable optical attenuator, the process enters step 504, and the step of adjusting the attenuation value of the variable optical attenuator to the target attenuation value is performed; if the target attenuation value is not within the preset attenuation range of the variable optical attenuator, the process enters step 505, and the step of adjusting the pump laser is performed.

Step 504, adjusting the attenuation value of the variable optical attenuator to a target attenuation value.

Step 505, obtaining the actual output optical power of the optical fiber amplifier according to the actual output optical power of the system and the current attenuation value of the variable optical attenuator.

Step 506, obtaining the target output current of the pump laser according to the actual output optical power of the optical fiber amplifier, the preset output optical power of the optical fiber amplifier, and the current output current of the pump laser.

Step 507, adjusting the output current of the pump laser to the target output current.

It is not difficult to find that the above steps 501, 502, and 504 are the same as the steps 301 to 303 of the third embodiment, and the steps 505, 506, and 507 are the same as the steps 4022, 4032, and 4033 of the fourth embodiment. It is not repeated here to avoid repetition.

In this embodiment, it is necessary to determine whether the target attenuation value is within the preset attenuation range of the variable optical attenuator. When the target attenuation value is not within the preset attenuation range, that is, the attenuation value of the variable optical attenuator cannot be adjusted to the target attenuation value, and the control feedback loop of the variable optical attenuator cannot adjust the actual output optical power of the current system. Therefore, in this embodiment, when the target attenuation value is not within the preset attenuation range, the control feedback loop of the pump laser is turned on; when the target attenuation value is within the preset attenuation range, it is adjusted through the control feedback loop of the variable optical attenuator, so that in the whole loop control, the control feedback loop of the variable optical attenuator is used as much as possible to adjust the actual output optical power of the system; only when the variable optical attenuator cannot be adjusted, the control feedback loop of the pump laser is turned on. The opening frequency of the control feedback loop of the pump laser is reduced as much as possible, so that the two feedback loops can cooperate with each other to adjust the actual output light power of the system. Further, while the stability of the actual output light of the system is improved, the noise interference caused by frequent changes in the size of the pump light of the pump laser is eliminated.

Those of ordinary skill in the art can understand that the above-mentioned embodiments are specific embodiments for realizing the present application, and in practical applications, various changes can be made to it in form and details without departing from the spirit and scope of the present application.

## Claims

1. A loop control system, **characterized by** comprising: a coupler, a pump laser, an optical fiber amplifier, a variable optical attenuator, an optical splitter, a photoelectric detector, and a loop controller;
wherein a first input end of the coupler is used as an input end of the system and is configured to receive signal light, and a second input end of the coupler is connected to an output end of the pump laser;
wherein an output end of the coupler is connected to an input end of the optical fiber amplifier, an output end of the optical fiber amplifier is connected to an input end of the variable optical attenuator, and an output end of the variable optical attenuator is connected to an input end of the optical splitter; and
wherein a first output end of the optical splitter is used as an output end of the system, a second output end of the optical splitter is connected to an input end of the photoelectric detector, an output end of the photoelectric detector is connected to an input end of the loop controller, and a first control end of the loop controller is connected to a control end of the variable optical attenuator.

2. The loop control system according to claim 1, wherein a second control end of the loop controller is connected to a control end of the pump laser.

3. The loop control system according to claim 2, wherein:
the loop controller comprises: an analog-to-digital converter, a controller, an adder, a first integrator, a second integrator, a first digital-to-analog converter, a second digital-to-analog converter;
the controller is respectively connected to the analog-to-digital converter, the adder, the first integrator, the second integrator, the first digital-to-analog converter, and the second digital-to-analog converter;
an input end of the analog-to-digital converter is used as the input end of the loop controller, and an output end of the analog-to-digital converter is connected to an input end of the adder;
an output end of the adder is respectively connected to an input end of the first integrator and an input end of the second integrator; and
an output end of the first integrator is connected to an input end of the first digital-to-analog converter, an output end of the first digital-to-analog converter is connected to the variable optical attenuator, an output end of the second integrator is connected to an input end of the second analog-to-digital converter, and an output end of the second digital-to-analog converter is connected to the pump laser.

4. The loop control system according to any one of claims 1 to 3, wherein the system further comprises an isolator disposed between the optical fiber amplifier and the variable optical attenuator.

5. The loop control system according to any one of claims 1 to 4, wherein the coupler is an isolation coupler.

6. The loop control system according to any one of claims 1 to 5, wherein the optical fiber amplifier is one of an erbium-doped optical fiber amplifier, a praseodymium-doped optical fiber amplifier, and a niobium-doped optical fiber amplifier.

7. A loop control method, applied to a loop controller in a loop control system; the loop control system comprising: a coupler, a pump laser, an optical fiber amplifier, a variable optical attenuator, an optical splitter, a photoelectric detector; wherein a first input end of the coupler is used as an input end of the system and is configured to receive signal light, a second input end of the coupler is connected to an output end of the pump laser, an output end of the coupler is connected to an input end of the optical fiber amplifier, an output end of the optical fiber amplifier is connected to an input end of the variable optical attenuator, and an output end of the variable optical attenuator is connected to an input end of the optical splitter, a first output end of the optical splitter is used as an output end of the system, a second output end of the optical splitter is connected to an input end of the photoelectric detector, an output end of the photoelectric detector is connected to an input end of the loop controller, and a first control end of the loop controller is connected to a control end of the variable optical attenuator; **characterized by**, the method comprising:
obtaining an electrical signal output by the photoelectric detector, and determining an actual output optical power of the system according to the electrical signal;
obtaining a target attenuation value of the variable optical attenuator according to the actual output optical power of the system, a preset output optical power of the system, and a current attenuation value of the variable optical attenuator, in the case that the actual output optical power of the system does not match the preset output optical power of the system; and
adjusting the attenuation value of the variable optical attenuator to the target attenuation value.

8. The loop control method according to claim 7, wherein a second control end of the loop controller is connected to a control end of the pump laser, and after the obtaining the electrical signal output by the photoelectric detector and determining the actual output optical power of the system according to the output electrical signal, the method further comprises:
adjusting the pump laser, comprising:
obtaining an actual output optical power of the optical fiber amplifier according to the actual output optical power of the system and the current attenuation value of the variable optical attenuator;
obtaining a target output current of the pump laser according to the actual output optical power of the optical fiber amplifier, a preset output optical power of the optical fiber amplifier, and a current output current of the pump laser, in the case that the actual output optical power of the optical fiber amplifier does not match the preset output optical power of the optical fiber amplifier; and
adjusting the output current of the pump laser to the target output current.

9. The loop control method according to claim 7 or 8, wherein after the obtaining the target attenuation value of the variable optical attenuator according to the actual output optical power of the system, the preset output optical power of the system, and the current attenuation value of the variable optical attenuator, the method further comprises:
determining whether the target attenuation value is within a preset attenuation range of the variable optical attenuator;
in response to that the target attenuation value is within the preset attenuation range of the variable optical attenuator, adjusting the attenuation value of the variable optical attenuator to the target attenuation value; or
in response to that the target attenuation value is not within the preset attenuation range of the variable optical attenuator, adjusting the pump laser.

10. The loop control method according to any one of claims 7 to 9, wherein the obtaining the target attenuation value of the variable optical attenuator according to the actual output optical power of the system, the preset output optical power of the system, and the current attenuation value of the variable optical attenuator comprises:
obtaining an adjustment value of the attenuation value of the variable optical attenuator according to the actual output optical power of the system and the preset output optical power of the system; and
obtaining the target attenuation value according to the current attenuation value of the variable optical attenuator and the adjustment value.

11. The loop control method according to any one of claims 7 to 10, wherein the determining the actual output optical power of the system according to the electrical signal comprises:
obtaining the actual output optical power of the system according to a voltage of the electrical signal, and a function between the actual output optical power of the system preset by the system and the voltage of the electrical signal.

12. The loop control method according to any one of claims 7 to 11, wherein the adjusting the attenuation value of the variable optical attenuator to the target attenuation value comprises:
obtaining a target control voltage of the variable optical attenuator according to the target attenuation value; and
adjusting a control voltage of the variable optical attenuator to the target control voltage, so that the attenuation value of the variable optical attenuator is adjusted to the target attenuation value.
